# EUROPEAN PATENT APPLICATION

(11) **EP 1 928 183 A2**
(43) Date of publication of application: **04.06.2008**
(21) Application number: 07115711.9
(22) Date of filing: 05.09.2007
(51) Int. Cl.: H04N 7/64

(54) **Decoder Device, Receiver Device, and Medium Reproduction Device with error handling**

(30) Priority: 30.11.2006 JP 2006324238
(71) Applicant: MATSUSHITA ELECTRIC INDUSTRIAL CO., LTD, Kadoma-shi, Osaka 571-8501 (JP)
(72) Inventor: Nakamori, Masahiro c/o Matsushita Electric Industrial Co., Ltd., 2-1-61, Shiromi, Chuo-ku Osaka 540-6207 (JP); Sueyoshi, Masahiro c/o Matsushita Electroc Industrial Co., Ltd., 2-1-61, Shiromi, Chuo-ku Osaka 540-6207 (JP)
(74) Representative: Grünecker, Kinkeldey, Stockmair & Schwanhäusser Anwaltssozietät

(57) **Abstract**

A decoding/outputting section decodes encoded data. A decoding error determination section determines presence/absence of a decoding error each time the encoded data is decoded by the decoding/outputting section. A storing section stores determination results in a chronological order. A determination section determines whether the number of determination results indicating "decoding error", among latest N consecutive ones of the determination results stored in the storing section, is greater than or equal to M. A control section has a normal mode in which the control section limits an output of the decoding/outputting section based on a determination and an error mode in which the control section unconditionally limits an output of the decoding/outputting section irrespective of the determination result. The control section transitions to the error mode when the determination section determines that the number of determination results indicating "decoding error" is greater than or equal to M.

## Description

### BACKGROUND OF THE INVENTION

### 1. Field of the Invention

The present invention relates to a decoder device for decoding encoded data, a receive device including a decoder device therein, and a medium reproduction device including a decoder device therein, and more particularly to a technique for controlling a decoding process based on decoding errors in the encoded data.

### 2. Description of the Background Art

A conventional audio/video reproduction device includes a demultiplexing block for demultiplexing a multiplexed signal obtained by multiplexing an encoded audio signal and an encoded video signal, a video decoding block for decoding the encoded video signal demultiplexed by the demultiplexing block, and an audio decoding block for decoding the encoded audio signal demultiplexed by the demultiplexing block. Moreover, the audio decoding block detects sync words and checks marker bits to thereby determine the presence/absence of a decoding error. If it is determined that there is a decoding error, it is assumed that the internal data is corrupted in the encoded audio signal and that it will result in audio noise if decoded. Therefore, the audio output is muted or attenuated for the portion where a decoding error is detected. Thus, audio noise is suppressed from being output.

However, where the internal data is corrupted over a continuous portion of the encoded audio signal (e.g., where the carrier wave of the multiplexed signal has a poor C/N ratio), a decoding error may accidentally go undetected by the decoding error detection process. Then, the corrupted encoded data is decoded and output, thus resulting in unpleasant noise. Similarly, a corrupted encoded video signal results in significant abnormality in the image. Thus, problems occur if corrupted encoded data is accidentally decoded and output.

### SUMMARY OF THE INVENTION

In view of the above, an object of the present invention is to suppress corrupted encoded data from being erroneously output by accident. More specifically, an object of the present invention is to suppress the accidental occurrence of unpleasant audio noise, significant abnormality in the image, or the like, when the internal data is corrupted over a continuous portion.

According to one aspect of the present invention, a decoder device of the present invention is a device for sequentially decoding a plurality of encoded data arranged in a chronological order, the decoder device including: a decoding/outputting section for decoding the encoded data; a decoding error determination section for determining presence/absence of a decoding error each time the encoded data is decoded by the decoding/outputting section; a determination result storing section for storing determination results from the decoding error determination section in a chronological order; a dynamic determination section for determining whether the number of determination results indicating "decoding error", among N (N is a natural number) consecutive ones of the determination results stored in the determination result storing section, is greater than or equal to M (M≤N), the N consecutive determination results including latest determination result; and an output control section having a normal mode in which the output control section limits an output of the decoding/outputting section based on a determination result from the decoding error determination section and an error mode in which the output control section unconditionally limits an output of the decoding/outputting section irrespective of the determination result, wherein the output control section transitions to the error mode when the dynamic determination section determines that the number of determination results indicating "decoding error" is greater than or equal to M.

With this decoder device, the output of the decoding/outputting section is unconditionally limited based on the frequency of decoding errors, whereby it is possible to suppress corrupted encoded data from being erroneously output by accident.

Preferably, the dynamic determination section further determines whether a duration of the error mode is greater than or equal to a period of time corresponding to J pieces of the encoded data (J is a natural number) and the number of determination results indicating "decoding error", among K (K is a natural number) ones of the determination results stored in the determination result storing section, is less than or equal to L (L≤K), the K consecutive determination results including latest determination result; and the output control section further terminates the error mode and transitions to the normal mode if the dynamic determination section determines that the duration of the error mode is greater than or equal to a period of time corresponding J pieces of the encoded data and the number of determination results indicating "decoding error" is less than or equal to L.

With this decoder device, the output control section returns from the "error mode" to "normal mode" based on the frequency of decoding errors, whereby it is possible to terminate the unnecessary output limitation after the signal condition recovers.

According to another aspect of the present invention, a decoder device of the present invention is a device for sequentially processing a multiplexed signal obtained by multiplexing together a plurality of first encoded data arranged in a chronological order and a plurality of second encoded data corresponding to the plurality of first encoded data, the device including: a demultiplexing section for demultiplexing the multiplexed signal into first encoded data and second encoded data; a first decoding/outputting section for decoding the first encoded data separated by the demultiplexing section to output first decoded data; a first decoding error determination section for determining presence/absence of a decoding error each time the first encoded data is decoded by the first decoding/outputting section; a second decoding/outputting section for decoding the second encoded data separated by the demultiplexing section to output second decoded data; a second decoding error determination section for determining presence/absence of a decoding error each time the second encoded data is decoded by the second decoding/outputting section; a determination result storing section for storing determination results from the second decoding error determination section in a chronological order; a dynamic determination section for determining whether the number of determination results indicating "decoding error", among N (N is a natural number) consecutive ones of the determination results stored in the determination result storing section, is greater than or equal to M (M≤N), the N consecutive determination results including latest determination result; a data detection section for detecting from within the first decoding/outputting section the first decoded data corresponding to the second decoded data for which the latest determination result has been produced, if the dynamic determination section determines that the number of determination results indicating "decoding error" is greater than or equal to M; and an output control section having a normal mode in which the output control section limits an output of the first decoding/outputting section based on a determination result from the first decoding error determination section and an error mode in which the output control section unconditionally limits an output of the first decoding/outputting section irrespective of the determination result from the first decoding error determination section, wherein the output control section transitions to the error mode when the first decoded data detected by the data detection section is output from the first decoding/outputting section.

With this decoder device, the output of the first decoding/outputting section is unconditionally limited based on the frequency of decoding errors for the second encoded data, whereby it is possible to suppress corrupted encoded data from being erroneously output by accident.

Preferably, the dynamic determination section further determines whether a duration of the error mode is greater than or equal to a period of time corresponding to J pieces of the first decoded data (J is a natural number) and the determination results indicating "decoding error", among K (K is a natural number) ones of the determination results stored in the determination result storing section, is less than or equal to L (L≤K), the K consecutive determination results including latest determination result; the frame detection section further detects from within the first decoding/outputting section the first decoded data corresponding to the second decoded data for which the latest determination result has been produced, if the dynamic determination section determines that the duration of the error mode is greater than or equal to a period of time corresponding to J pieces of the first decoded data and the number of determination results indicating "decoding error" is less than or equal to L; and the output control section further terminates the error mode and transitions to the normal mode if the first decoded data detected by the data detection section is output from the first decoding/outputting section.

With this decoder device, the output control section returns from the "error mode" to the "normal mode" based on the frequency of decoding errors for the second encoded data, whereby it is possible to terminate the unnecessary output limitation after the signal condition recovers.

According to still another aspect of the present invention, a decoder device of the present invention is a device for sequentially processing a multiplexed signal obtained by multiplexing together packets of a plurality of encoded data arranged in a chronological order, the device including: a demultiplexing section for demultiplexing the multiplexed signal into packets of the encoded data; a demultiplexing error determination section for determining presence/absence of a demultiplexing error each time the encoded data is separated from the multiplexed signal by the demultiplexing section; a decoding/outputting section for decoding the encoded data separated by the demultiplexing section; a decoding error determination section for determining presence/absence of a decoding error each time the encoded data is decoded by the decoding/outputting section; a determination result storing section for storing determination results from the demultiplexing error determination section in a chronological order; a dynamic determination section for determining whether the number of determination results indicating "demultiplexing error", among N (N is a natural number) consecutive ones of the determination results stored in the determination result storing section, is greater than or equal to M (M≤N), the N consecutive determination results including latest determination result; a data detection section for detecting from within the decoding/outputting section the decoded data corresponding to the packet for which the latest determination result has been produced, if the dynamic determination section determines that the number of determination results indicating "demultiplexing error" is greater than or equal to M; and an output control section having a normal mode in which the output control section limits an output of the decoding/outputting section based on a determination result from the decoding error determination section and an error mode in which the output control section unconditionally limits an output of the decoding/outputting section irrespective of the determination result from the decoding error determination section, wherein the output control section transitions to the error mode when the decoded data detected by the data detection section is output from the decoding/outputting section.

With this decoder device, the output of the decoding/outputting section is unconditionally limited based on the frequency of demultiplexing errors, whereby it is possible to suppress corrupted encoded data from being erroneously output by accident.

Preferably, the dynamic determination section further determines whether a duration of the error mode is greater than or equal to a period of time corresponding to J pieces of the decoded data (J is a natural number) and the determination results indicating "demultiplexing error", among K (K is a natural number) ones of the determination results stored in the determination result storing section, is less than or equal to L (L≤K), the K consecutive determination results including latest determination result; the frame detection section further detects from within the decoding/outputting section the decoded data corresponding to the packet for which the latest determination result has been produced, if the dynamic determination section determines that the duration of the error mode is greater than or equal to a period of time corresponding to J pieces of the decoded data and that the number of determination results indicating "demultiplexing error" is less than or equal to L; and the output control section further terminates the error mode and transitions to the normal mode if the decoded data detected by the data detection section is output from the decoding/outputting section.

With this decoder device, the output control section returns from the "error mode" to the "normal mode" based on the frequency of demultiplexing errors, whereby it is possible to terminate the unnecessary output limitation after the signal condition recovers.

### BRIEF DESCRIPTION OF THE DRAWINGS

FIG. **1** is a block diagram showing a configuration of a decoder device according to a first embodiment of the present invention.
FIG. **2** shows an example of a multiplexed signal, an encoded audio signal, an encoded video signal, and an encoded subtitle signal.
FIG. **3** is a flow chart showing the operation of the decoder device shown in FIG. **1****.**
FIG. **4** shows an error mode setting process of the decoder device shown in FIG. **1****.**
FIG. **5** shows an error mode terminating process of the decoder device shown in FIG. **1****.**
FIG. **6** is a block diagram showing a configuration of a decoder device according to a second embodiment of the present invention.
FIG. **7** is a flow chart showing the operation of the decoder device shown in FIG. **6****.**
FIG. **8** shows an error mode setting process of the decoder device shown in FIG. **6****.**
FIG. **9** shows an error mode terminating process of the decoder device shown in FIG. **6****.**
FIG. **10** is a block diagram showing a configuration of a decoder device according to a third embodiment of the present invention.
FIG. **11** is a flow chart showing the operation of the decoder device shown in FIG. **10****.**
FIG. **12** shows an error mode setting process of the decoder device shown in FIG. **10****.**
FIG. **13** shows an error mode terminating process of the decoder device shown in FIG. **10****.**
FIG. **14** is a block diagram showing a configuration of a receiver device.
FIG. **15** is a block diagram showing a configuration of a storage medium reproduction device.

### DESCRIPTION OF THE PREFERRED EMBODIMENTS

Embodiments of the present invention will now be described in detail with reference to the drawings. In the drawings, like elements are denoted by like reference numerals and will not be described repeatedly.

### FIRST EMBODIMENT

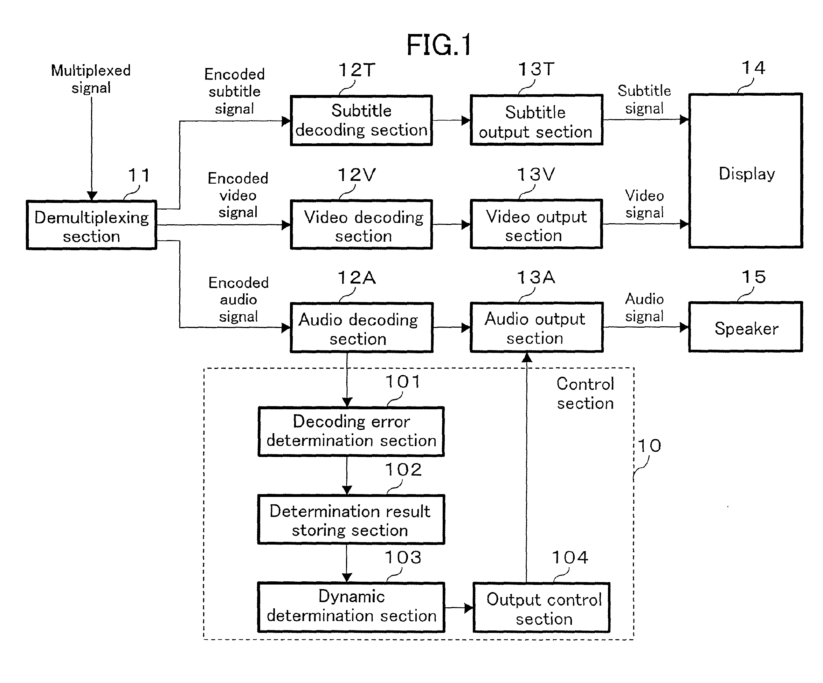

FIG. **1** shows a configuration of a decoder device according to a first embodiment of the present invention. The device receives a multiplexed signal carried on a broadcast radio wave or a multiplexed signal stored on a DVD or an HDD, and decodes the multiplexed signal into an audio signal, a video signal and a subtitle signal, which are output to a display 14 and a speaker 15. The device includes a demultiplexing section **11,** an audio decoding section **12A,** a video decoding section **12V,** a subtitle decoding section **12T,** an audio output section **13A,** a video output section **13V,** a subtitle output section **13T,** and a control section **10.**

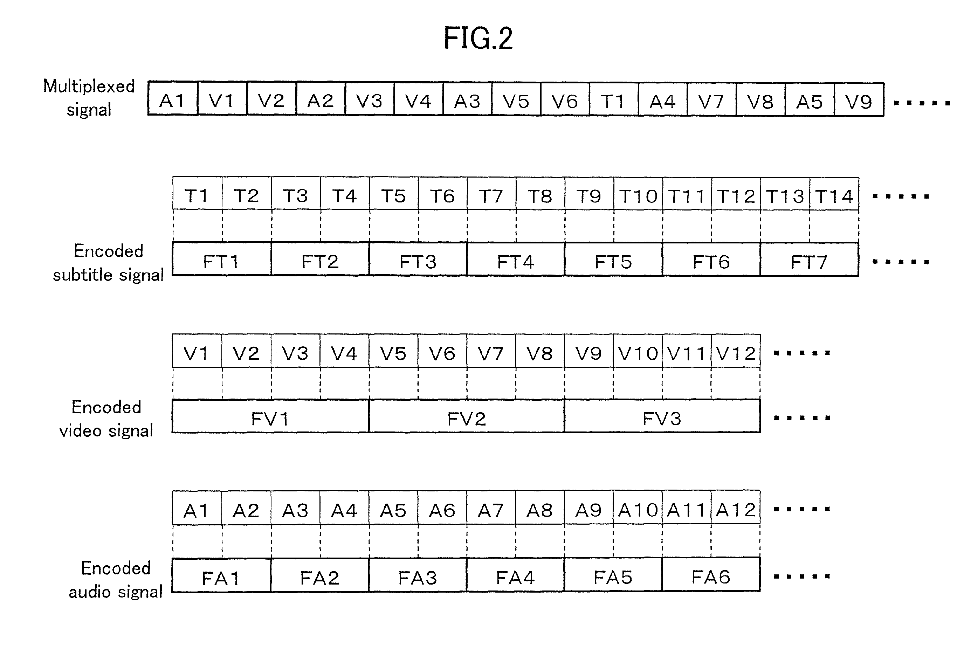

FIG. **2** shows an example of a multiplexed signal, an encoded audio signal, an encoded video signal, and an encoded subtitle signal. The encoded audio signal includes a plurality of audio frames (encoded audio data) FA1, FA2, FA3, .... The encoded video signal includes a plurality of image frames (encoded image data) FV1, FV2, FV3, .... The encoded subtitle signal includes a plurality of subtitle frames (encoded subtitle data) FT1, FT2, FT3, .... Each of the audio frames, the image frames and the subtitle frames includes output time information representing the point in time at which to output the frame, a marker bit and a sync word to be used for the decoding error determination, and other necessary information that are needed for reproducing the audio, video and subtitle.

The multiplexed signal is obtained by multiplexing together packets of the encoded audio signal, packets of the encoded video signal and packets of the encoded subtitle signal. The multiplexed signal includes audio packets A1, A2, A3, ..., storing data of the encoded audio signal, video packets V1, V2, V3, ..., storing data of the encoded video signal, and subtitle packets T1, ..., storing data of the encoded subtitle signal. For example, an audio frame FA1 is divided into packets and stored in the audio packets A1 and A2.

The demultiplexing section **11** demultiplexes the multiplexed signal into packets and analyzes each demultiplexed packet to output the packet to one of the audio decoding section **12A,** the video decoding section **12V** and the subtitle decoding section **12T** depending on the type of the encoded data stored in that packet. Thus, the encoded audio signal, the encoded video signal and the encoded subtitle signal are supplied to the audio decoding section **12A,** the video decoding section **12V** and the subtitle decoding section **12T,** respectively.

The audio decoding section **12A** sequentially decodes a plurality of audio frames output as an encoded audio signal from the demultiplexing section **11.** The audio output section **13A** stores the decoded audio frames (decoded audio data) produced by the audio decoding section **12A,** and sequentially outputs the decoded audio frames based on the output time information added to each frame. Thus, an audio signal is output.

The video decoding section **12V** sequentially decodes a plurality of image frames output as an encoded video signal from the demultiplexing section **11.** The video output section **13V** stores the decoded image frames (decoded image data) produced by the video decoding section **12V,** and sequentially outputs the decoded image frames based on the output time information added to each frame. Thus, a video signal is output.

The subtitle decoding section **12T** sequentially decodes a plurality of subtitle frames output as an encoded subtitle signal from the demultiplexing section **11.** The subtitle output section **13T** stores the decoded subtitle frames (decoded subtitle data) produced by the subtitle decoding section **12T,** and sequentially outputs the decoded subtitle frames based on the output time information added to each frame. Thus, a subtitle signal is output.

The control section **10** limits the output of the audio output section **13A** based on the presence/absence of decoding errors in the audio decoding section **12A.** The control section **10** includes a decoding error determination section **101,** a determination result storing section **102,** a dynamic determination section **103,** and an output control section **104.**

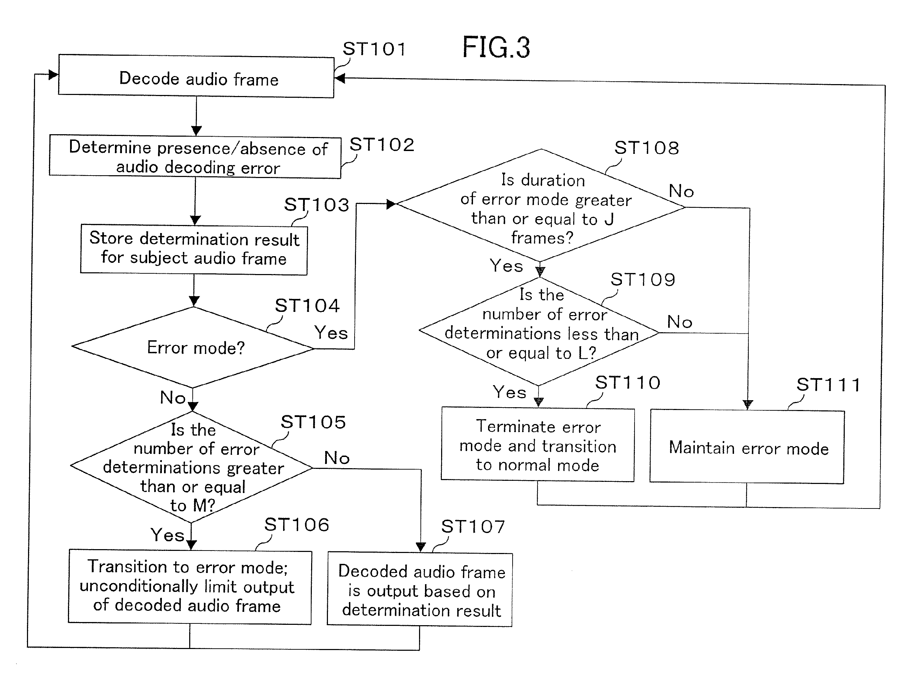

Referring now to FIG. **3****,** the operation of the decoder device shown in FIG. **1** will be described. In the following description, the focus of discussion will be on the operation of the audio decoding section **12A,** the audio output section **13A** and the control section **10.**

### [Step ST101]

The audio decoding section **12A** decodes an audio frame. The audio output section **13A** stores the decoded audio frame.

### [Step ST102]

Then, the decoding error determination section **101** determines whether a decoding error has occurred while the audio decoding section **12A** decodes the audio frame. For example, the decoding error determination section **101** determines whether the marker bit added to an audio frame coincides with a predetermined bit. The decoding error determination section **101** determines whether a sync word added to an audio frame is located at a predetermined position.

### [Step ST103]

Then, the determination result storing section **102** stores the determination results from the decoding error determination section **101** in a chronological order.

### [Step ST104]

Then, as the latest determination result is stored in the determination result storing section **102,** the dynamic determination section **103** determines whether the operation mode of the output control section **104** is the "error mode". The process proceeds to step ST105 if the operation mode of the output control section **104** is the error mode. Otherwise, the process proceeds to step ST108.

### [StepST105]

Then, the dynamic determination section **103** determines whether the number of determination results indicating "decoding error", among N (N is a natural number) ones of the determination results stored in the determination result storing section **102,** is greater than or equal to M (M≤N). The N determination results include latest determination result. If the number of error determinations is greater than or equal to M, the process proceeds to step ST106. Otherwise, the process proceeds to step ST107.

### [Step ST106]

Then, the output control section **104** transitions from the "normal mode" to the "error mode". In the error mode, the output control section **104** unconditionally limits the output of the audio output section **13A,** irrespective of the determination results from the decoding error determination section **101.** Specifically, when the decoded audio frame produced in step ST101 is output from the audio output section **13A,** the output control section **104** limits the audio output section **13A** so that the amplitude of the audio output is unconditionally attenuated (or muted). Then, the process proceeds to step ST101.

### [Step ST107]

If the dynamic determination section **103** determines in step ST105 that the number of error determinations is smaller than M, the output control section **104** stays in the "normal mode". In the normal mode, the output control section **104** controls the audio output section **13A** to output a decoded audio frame produced in step ST101 based on the determination result from the decoding error determination section **101.** Specifically, where the determination result indicates "decoding error", the output control section **104** controls the audio output section **13A** so that the amplitude of the audio output is attenuated (or muted), and where the determination result indicates "no decoding error", the output control section **104** controls the audio output section **13A** so that the decoded audio frame is output without being limited. Then, the process proceeds to step ST101.

Thus, the output of the audio output section **13A** is unconditionally limited based on the frequency of audio frame decoding errors.

### [Step ST108]

If it is determined in step ST104 that the operation mode of the output control section **104** is the error mode, the dynamic determination section **103** determines whether the period over which the operation mode of the output control section **104** has been the error mode (the error mode duration) is greater than or equal to a period of time corresponding to J audio frames (J is a natural number). If the error mode duration is greater than or equal to a period of time corresponding to J audio frames, the process proceeds to step ST109. Otherwise, the process proceeds to step ST111.

### [Step ST109]

Then, the dynamic determination section **103** determines whether the number of determination results indicating "decoding error" (the number of error determinations), among K (K is a natural number) ones of the determination results stored in the determination result storing section **102,** is less than or equal to L (L≤K). The K determination results include latest determination result. If the number of error determinations is less than or equal to L, the process proceeds to step ST110. Otherwise, the process proceeds to step ST111.

### [Step ST110]

Then, the output control section **104** terminates the "error mode" and transitions to the "normal mode". Thus, the output control section **104** controls the audio output section **13A** so that decoded audio frames are output based on the decoding error determination results. Then, the process proceeds to step ST101.

### [Step ST111]

If it is determined in step ST108 that the error mode duration is shorter than a period of time corresponding to J audio frames or if the dynamic determination section **103** determines in step ST109 that the number of error determinations is greater than L, the output control section **104** stays in the "error mode". Thus, the output control section **104** unconditionally limits the output of the audio output section **13A.** Then, the process proceeds to step ST101.

Thus, the "error mode" of the output control section **104** is terminated based on the frequency of audio frame decoding errors.

### <Error mode setting process>

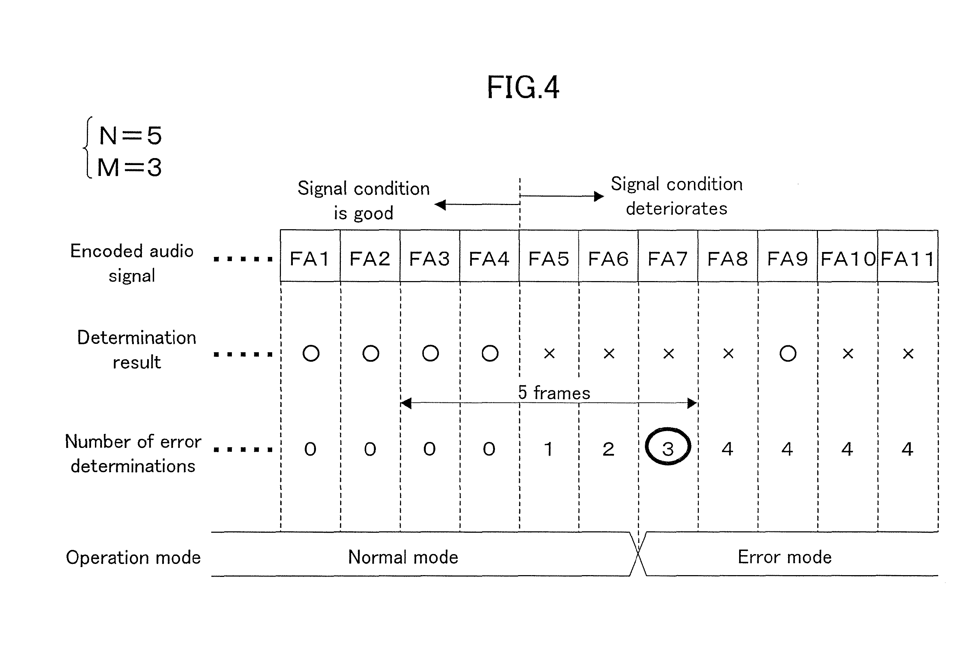

Referring now to FIG. **4****,** the process of setting the operation mode of the output control section **104** to the "error mode" will be described by way of a specific example. It is herein assumed that N=5 and M=3. In the figure, the symbol "o" represents "no decoding error", and "×" represents "decoding error" (this applies throughout the present specification).

In the period of the audio frames FA1 to FA4, the signal condition of the encoded audio signal is good, and the determination results for the audio frames FA1 to FA4 are "no decoding error".

In and after the audio frame FA5, the signal condition of the encoded audio signal deteriorates, and the internal data is corrupted over a continuous portion of the encoded audio signal. Thus, the determination result for each of the audio frames FA5 to FA8 is "decoding error".

When the determination result for the audio frame FA7 is obtained, the number of error determinations reaches "3", whereby the output control section **104** transitions from the "normal mode" to the "error mode". In and after the audio frame FA7, the output control section **104** unconditionally limits the output of the audio output section **13A.** Therefore, even if the determination result for the audio frame FA9 is accidentally "no decoding error", the output of the decoded audio frame for the audio frame FA9 is unconditionally limited.

### <Error mode terminating process>

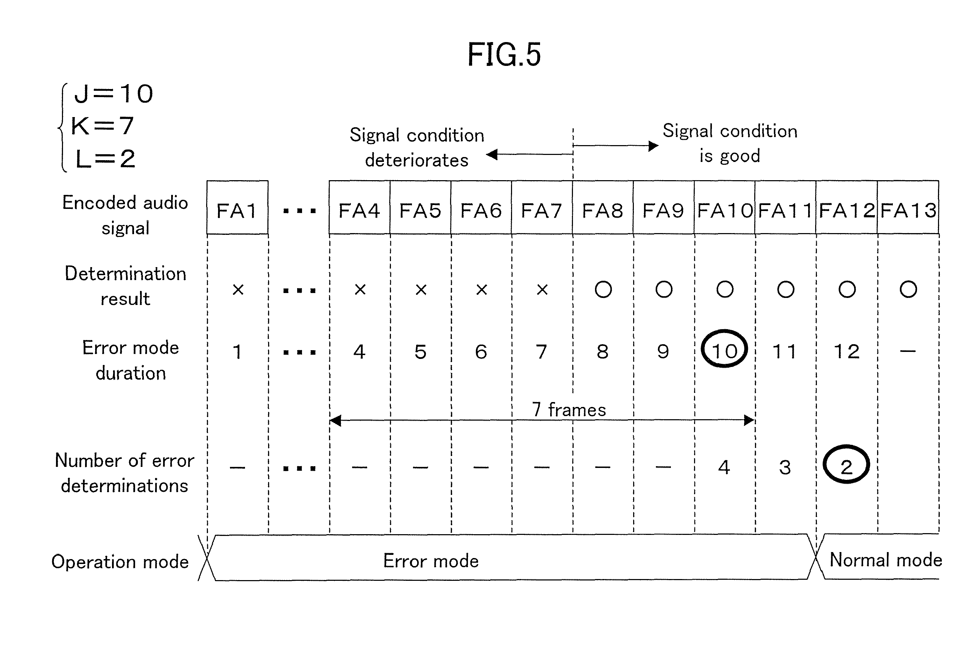

Referring now to FIG. **5****,** the process of terminating the error mode of the output control section **104** will be described. It is herein assumed that J=10, K=7 and L=2 (this applies throughout the present specification).

In the period of the audio frames FA1 to FA7, the signal condition of the encoded audio signal deteriorates, and the internal data is corrupted over a continuous portion of the encoded audio signal. Thus, the determination result for each of the audio frames FA1 to FA7 is "decoding error".

In and after the audio frame FA8, the signal condition of the encoded audio signal recovers, and the determination result for each of the audio frames FA8 to FA13 is "no decoding error".

For the period of the audio frames FA 1 to FA9, the error mode duration is less than "10 frames", and therefore the number of error determinations is not counted.

In the audio frame FA10, the error mode duration is greater than or equal to "10 frames", and therefore the dynamic determination section **103** counts the number of error determinations. However, since the number of error determinations is greater than "2", the output control section **104** stays in the "error mode". In the audio frame FA11, the output control section **104** similarly stays in the "error mode".

In the audio frame FA12, the number of error determinations is "2", and therefore the output control section **104** transitions from the "error mode" to the "normal mode". Thus, in and after the audio frame FA12, the output control section **104** controls the audio output section **13A** so that the decoded audio data are output based on the decoding error determination result.

As described above, the output of the audio output section is unconditionally limited based on the frequency of decoding errors, whereby it is possible to suppress corrupted encoded data from being erroneously output by accident. Thus, it is possible to suppress the accidental occurrence of unpleasant audio noise when the internal data is corrupted over a continuous portion of the encoded audio signal.

Since the output control section returns from the "error mode" to the "normal mode" based on the frequency of decoding errors, it is possible to terminate the unnecessary output limitation after the signal condition of the encoded signal recovers.

The object to be controlled by the control section **10** is not limited to the audio decoding section **12A** and the audio output section **13A,** but may be the video decoding section **12V** and the video output section **13V,** or may also be the subtitle decoding section **12T** and the subtitle output section **13T.**

Where the video decoding section **12V** and the video output section **13V** are to be controlled, the decoding error determination section **101** determines the presence/absence of decoding errors in the video decoding section **12V.** The output control section **104** limits the output of the video output section **13V.** Specifically, where the output control section **104** is set to the "error mode" or where the determination result indicates "decoding error", the video output section **13V** is controlled so that a decoded image frame that has been decoded previously and whose determination result is "no decoding error" is output, instead of the latest decoded image frame to be output by the video output section **13V.** With such a configuration, it is possible to suppress the accidental occurrence of a significant abnormality in the image when the signal condition of the encoded audio signal is bad.

Where the subtitle decoding section **12T** and the subtitle output section **13T** are to be controlled, the decoding error determination section **101** determines the presence/absence of decoding errors in the subtitle decoding section **12T.** The output control section **104** limits the output of the subtitle output section **13T.** Specifically, where the operation mode is the "error mode" or where the determination result indicates "decoding error", the output control section **104** controls the subtitle output section **13T** so that the output of the decoded subtitle frame is stopped. With such a configuration, it is possible to suppress the accidental occurrence of a significant abnormality in the subtitle when the signal condition of the encoded subtitle signal is bad.

### SECOND EMBODIMENT

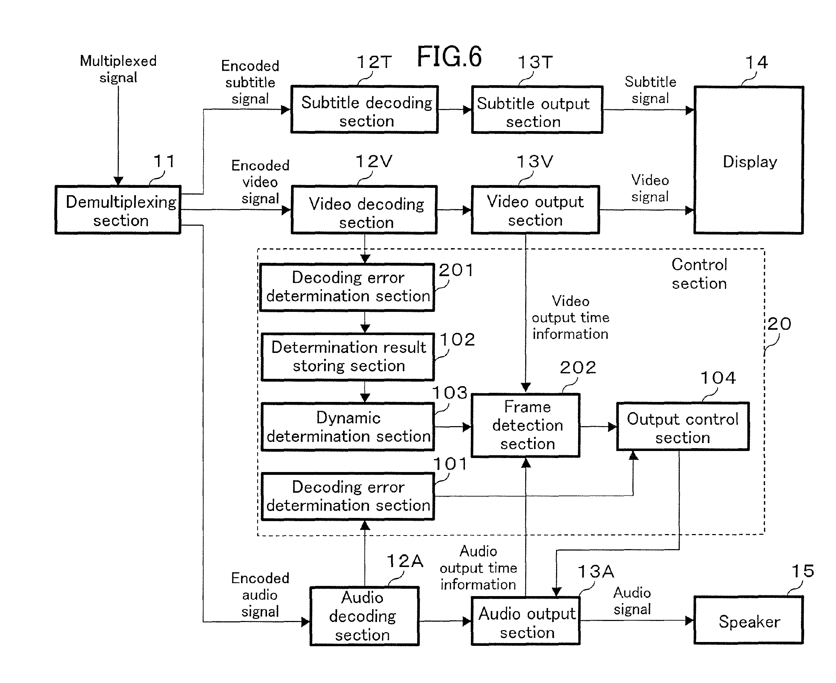

FIG. **6** shows a configuration of a decoder device according to a second embodiment of the present invention. The device includes a control section **20,** instead of the control section **10** shown in FIG. **1****.** The control section **20** unconditionally limits the output of the audio output section **13A** based on the frequency of decoding errors in the video decoding section **12V.** The control section **20** includes a decoding error determination section **201** and a frame detection section **202,** in addition to the control section **10** shown in FIG. **1****.** The decoding error determination section **201** determines the presence/absence of decoding errors in the video decoding section **12V.** The determination result storing section **102** stores the determination results from the decoding error determination section **201** in a chronological order. Otherwise, the configuration is similar to that of FIG. **1****.**

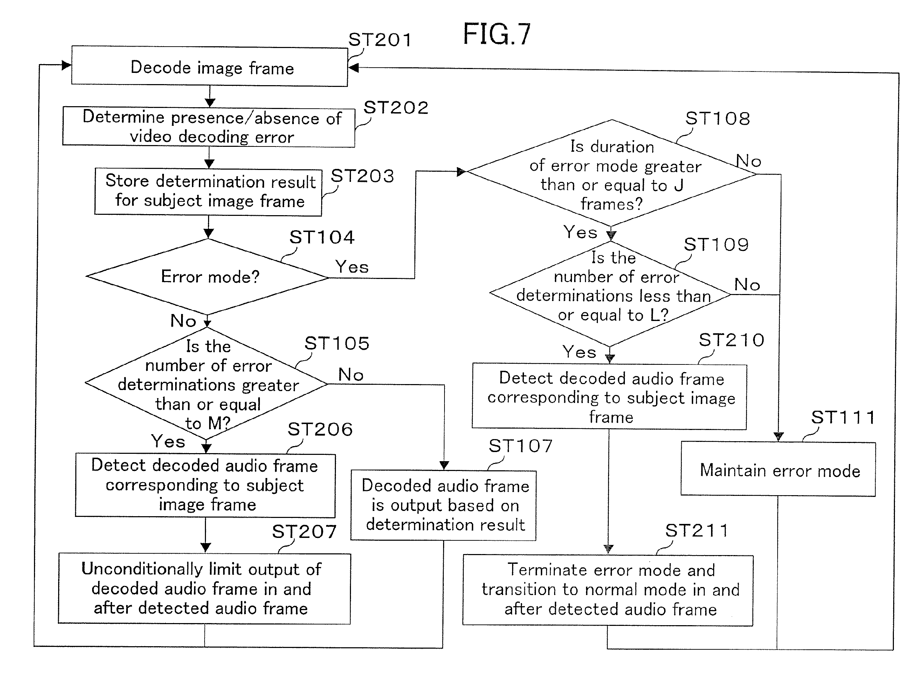

Referring now to FIG. 7, the operation of the decoder device shown in FIG. **6** will be described. In the following description, the focus of discussion will be on the video decoding section **12V,** the video output section **13V,** the audio decoding section **12A,** the audio output section **13A** and the control section **20.**

### [Step ST201]

The video decoding section **12V** decodes an image frame. The video output section **13V** stores the decoded image frame. The audio decoding section **12A** decodes an audio frame, and the audio output section **13A** stores the decoded audio frame.

### [Step ST202]

Then, the decoding error determination section **201** determines whether a decoding error has occurred while the video decoding section **12V** decodes the image frame. For example, the decoding error determination section **201** determines whether the marker bit included in the image frame coincides with a predetermined bit. The decoding error determination section **201** also determines whether parameter values included in the image frame, e.g., the image size, are normal.

### [Step ST203]

Then, the determination result storing section **102** stores the determination results from the decoding error determination section **201** (the determination results for image frames) in a chronological order.

### [Steps ST104 and ST105]

Then, the dynamic determination section **103** determines whether the operation mode of the output control section **104** is the "error mode" (ST104), and determines whether the number of error determinations (the number of error determinations for image frames) is greater than or equal to M (ST105). If the number of error determinations is greater than or equal to M, the process proceeds to step ST206. Otherwise, the process proceeds to step ST107.

### [Step ST206]

Then, the frame detection section **202** detects one of the decoded image frames stored in the video output section **13V** for which the presence/absence of a decoding error has been determined in step ST202 (the decoded image frame for which the latest determination result has been produced) to obtain the output time information (the video output time information) added to the detected decoded image frame. The frame detection section **202** monitors the output time information (the audio output time information) added to each of the decoded audio frames stored in the audio output section **13A** to detect the decoded audio frame to which audio output time information that matches (or that is closest in time to) the video output time information is added.

### [Step ST207]

Then, the output control section **104** transitions from the "normal mode" to the "error mode" when the decoded audio frame detected by the frame detection section **202** is output from the audio output section **13A.** Therefore, the output control section **104** controls the audio output section **13A** so that the amplitude of the audio output is unconditionally limited, irrespective of the determination result from the decoding error determination section **101** (the determination result for the audio frame). Then, the process proceeds to step ST201.

### [Step ST107]

If the dynamic determination section **103** determines in step ST105 that the number of error determinations is less than M, the output control section **104** stays in the "normal mode". Therefore, the output control section **104** controls the audio output section **13A** so as to output the decoded audio frame based on the determination result from the decoding error determination section **101** (the determination result for the audio frame). Then, the process proceeds to step ST201.

Thus, the output of the audio output section **13A** is unconditionally limited based on the frequency of decoding errors for image frames.

### [Steps ST108 and ST109]

If it is determined in step ST104 that the operation mode of the output control section **104** is the "error mode", the dynamic determination section **103** determines whether the error mode duration is greater than or equal to a period of time corresponding to J audio frames (J is a natural number) (ST108), and determines whether the number of error determinations (the number of error determinations for image frames) is less than or equal to L (ST109). If the number of error determinations is less than or equal to L, the process proceeds to step ST210. Otherwise, the process proceeds to step ST111.

### [Step ST210]

Then, as in step ST203, the frame detection section **202** detects a decoded image frame for which the presence/absence of a decoding error has been determined in step ST202 to obtain the video output time information added to the detected decoded image frame. The frame detection section **202** monitors the audio output time information added to each of the decoded audio frames stored in the audio output section **13A** to detect the decoded audio frame to which audio output time information that matches (or that is closest in time to) the video output time information is added.

### [Step ST211]

Then, the output control section **104** terminates the "error mode" and transitions to the "normal mode" when the decoded audio frame detected by the frame detection section **202** is output from the audio output section **13A.** Therefore, the output control section **104** controls the audio output section **13A** so that the decoded audio frame is output based on the determination result from the decoding error determination section **101** (the determination result for the audio frame). Then, the process proceeds to step ST201.

### [Step ST111]

If the dynamic determination section **103** determines in step ST108 that the error mode duration is shorter than a period of time corresponding to J audio frames or if the dynamic determination section **103** determines in step ST109 that the number of error determinations (the number of error determinations for image frames) is greater than L, the output control section **104** stays in the "error mode". Thus, the output control section **104** unconditionally limits the output of audio signals from the audio output section **13A,** irrespective of the determination result from the decoding error determination section **101** (the determination result for the audio frame). Then, the process proceeds to step ST201.

Thus, the "error mode" of the output control section **104** is terminated based on the frequency of decoding errors for image frames.

### <Error mode setting process>

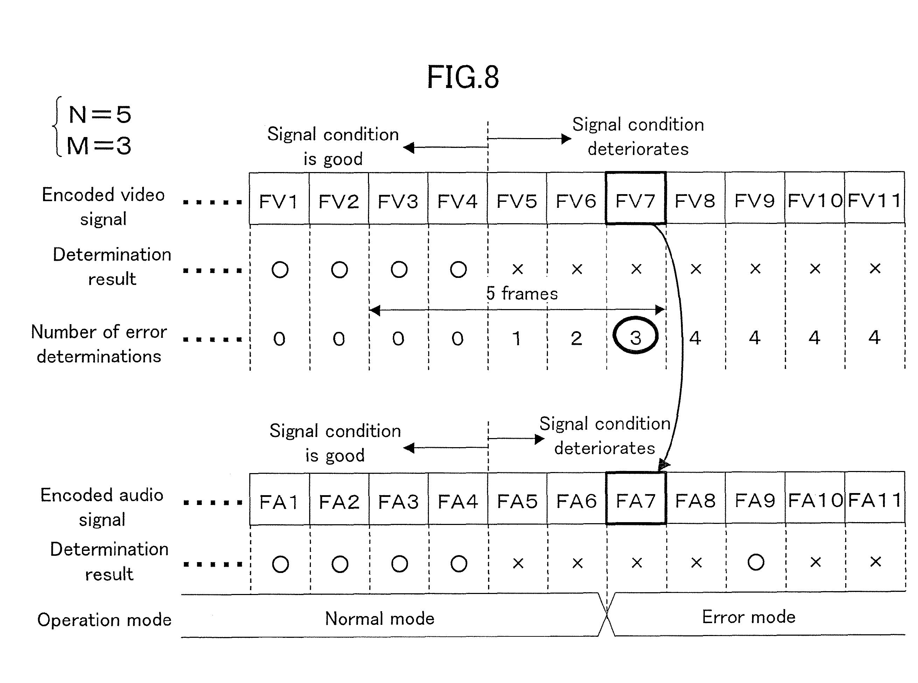

Referring now to FIG. **8****,** the error mode setting process of the decoder device shown in FIG. **6** will be described in detail. Note that the encoded video signal and the encoded audio signal are obtained by dividing the same multiplexed signal into the respective signals, and the output time information of the image frames FV1 to FV11 correspond to those of the audio frames FA1 to FA 11, respectively.

In the period of the image frames FV1 to FV4, the signal condition of the encoded video signal is good, and the determination results for the image frames FV1 to FV4 are "no decoding error".

In and after the image frame FV5, the signal condition of the encoded video signal deteriorates, and the internal data is corrupted over a continuous portion of the encoded video signal. Therefore, the determination result for each of the image frames FV5 to FV11 is "decoding error".

When the determination result for the image frame FV7 is obtained, the number of error determinations reaches "3", and the frame detection section **202** detects the audio frame FA7 corresponding to the image frame FV7. The output control section **104** transitions from the "normal mode" to the "error mode" when the audio frame FA7 is output from the audio output section **13A.**

The signal condition of the encoded audio signal also deteriorates at the same time, whereby the determination result for each of the audio frames FA5 to FA8 is "decoding error". In and after the audio frame FA7, the output control section **104** unconditionally limits the output of the audio output section **13A.** Therefore, even if the determination result for the audio frame FA9 is accidentally "no decoding error", the output of the decoded audio frame for the audio frame FA9 is unconditionally limited.

### <Error mode terminating process>

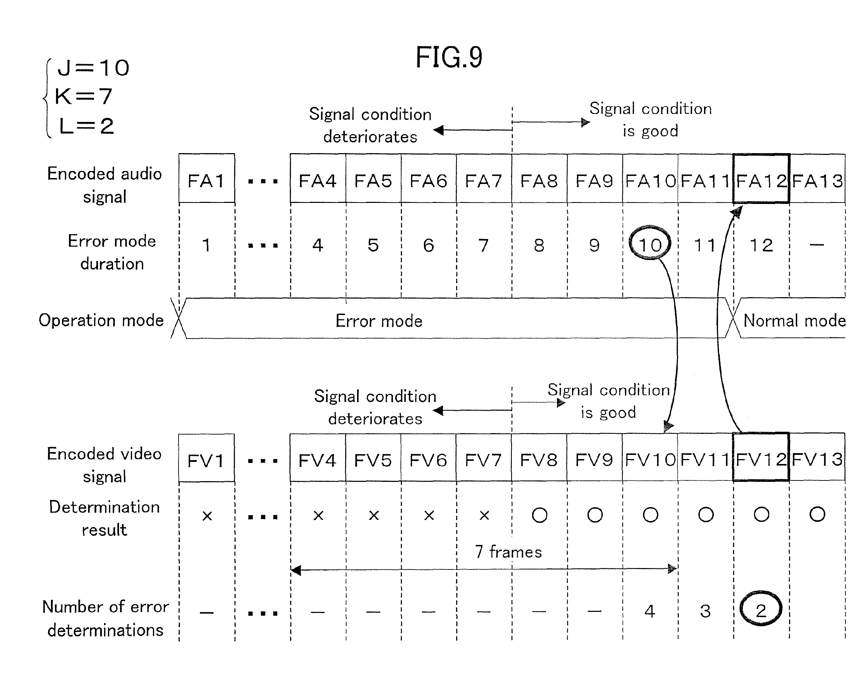

Referring now to FIG. **9****,** the error mode terminating process of the decoder device shown in FIG. **6** will be described in detail.

In the period of the image frames FV1 to FV7, the signal condition of the encoded video signal deteriorates, and the internal data is corrupted over a continuous portion of the encoded video signal. Therefore, the determination result for each of the image frames FV1 to FV7 is "decoding error".

In and after the image frame FV8, the signal condition of the encoded video signal recovers, and the determination result for each of the image frames FV8 to FV13 is "no decoding error".

For the period of the audio frames FA1 to FA9, the error mode duration is less than "10 frames", and therefore the dynamic determination section **103** does not count the number of error determinations for image frames.

The error mode duration becomes greater than or equal to "10 frames" when the audio frame FA10 is decoded by the audio decoding section **12A.** At this point in time, the image frame FV10 is decoded by the video decoding section **12V.** Therefore, when the determination result for the image frame FV10 is obtained, the dynamic determination section **103** counts the number of error determinations for image frames. However, since the number of error determinations is greater than "2", the output control section **104** stays in the "error mode". Similarly, when the determination result for the image frame FV11 is obtained, the output control section **104** stays in the "error mode".

When the determination result for the image frame FV12 is obtained, the number of error determinations becomes "2", whereby the frame detection section **202** detects the audio frame FA12 corresponding to the image frame FV12. When the audio frame FA12 is output from the audio output section **13A,** the output control section **104** transitions from the "error mode" to the "normal mode". Therefore, in and after the audio frame FA12, the output control section **104** controls the audio output section **13A** so as to output decoded audio data based on the determination result for the audio frame.

As described above, the output of the audio output section is unconditionally limited based on the frequency of decoding errors for image frames, whereby it is possible to suppress corrupted encoded data from being erroneously output by accident. Thus, it is possible to suppress the accidental occurrence of unpleasant audio noise when the internal data is corrupted over a continuous portion of the encoded audio signal.

Since the output control section returns from the "error mode" to the "normal mode" based on the frequency of decoding errors for image frames, it is possible to terminate the unnecessary output limitation after the signal condition recovers.

The control section **20** may also be configured so as to limit the output of the video output section **13V** based on the frequency of decoding errors for audio frames. In such a case, the decoding error determination section **201** may determine the presence/absence of decoding errors in the audio decoding section **12A** and the decoding error determination section **101** may determine the presence/absence of decoding errors in the video decoding section **12V,** whereby the output of the video output section **13V** is limited by the output control section **104.**

The control section **20** may also be configured so as to limit the output of the subtitle output section **13T** based on the frequency of decoding errors for video frames (or audio frames).

### THIRD EMBODIMENT

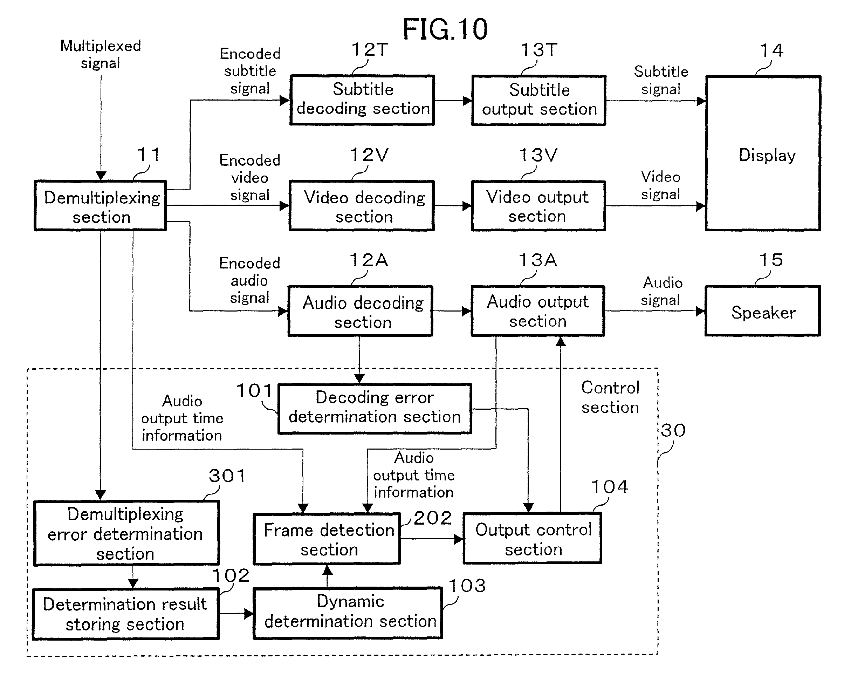

FIG. **10** shows a configuration of a decoder device according to a third embodiment of the present invention. The device includes a control section **30,** instead of the control section **10** shown in FIG. **1****.** The control section **30** limits the output of the audio output section **13A** based on the frequency of demultiplexing errors in the demultiplexing section **11.** The control section **30** includes a demultiplexing error determination section **301** and the frame detection section **202** shown in FIG. 5, in addition to the control section **10** shown in FIG. **1****.** The determination result storing section **102** stores the determination results from the demultiplexing error determination section **301** in a chronological order. The demultiplexing section **11** monitors the audio output time information added to each audio frame, and notifies the control section **30** (the frame detection section **202)** of the latest audio output time information each time the audio output time information is updated. Otherwise, the configuration is similar to that of FIG. **1****.**

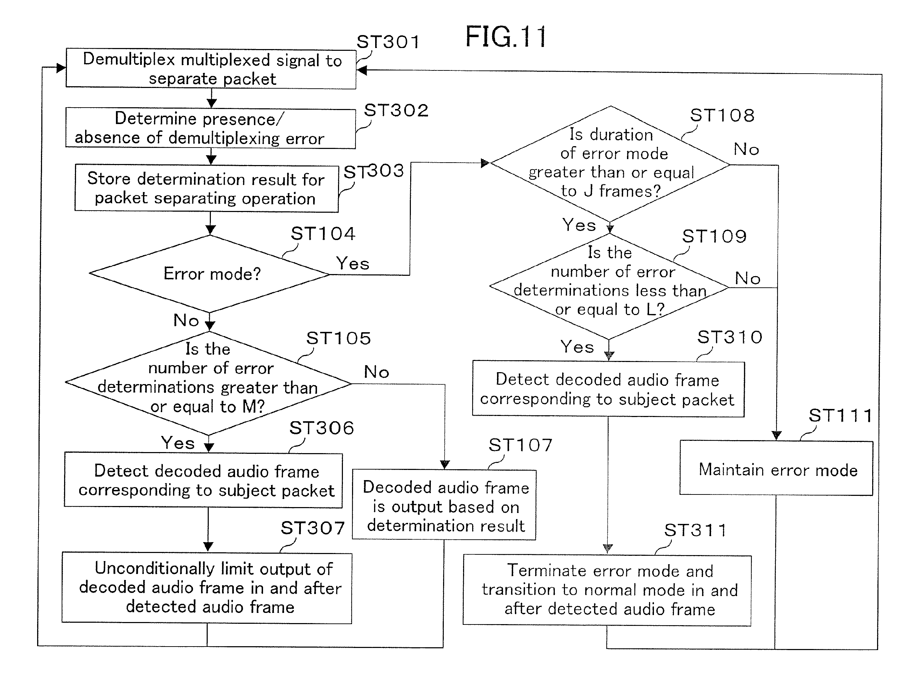

Referring now to FIG. **11****,** the operation of the decoder device shown in FIG. **10** will be described. In the following description, the focus of discussion will be on the demultiplexing section **11,** the audio output section **13A** and the control section **30.**

### [Step ST301]

The demultiplexing section **11** demultiplexes a multiplexed signal to separate each packet to produce an encoded audio signal, an encoded video signal and an encoded subtitle signal. The demultiplexing section **11** outputs the latest audio output time information to the control section **30** (the frame detection section **202).**

### [Step ST302]

Then, the demultiplexing error determination section **301** determines whether a demultiplexing error has occurred when the demultiplexing section **11** separates the packet. For example, the demultiplexing error determination section **301** determines whether the marker bit included in the multiplexed signal coincides with a predetermined bit. The demultiplexing error determination section **301** also determines whether parameter values included in the multiplexed signal, e.g., the packet length, are normal.

### [Step ST303]

Then, the determination result storing section **102** stores the determination result from the demultiplexing error determination section **301** in a chronological order.

### [Steps ST104 and ST105]

Then, the dynamic determination section **103** determines whether the operation mode of the output control section **104** is the "error mode" (ST104), and determines whether the number of error determinations (the number of error determinations occurring in the packet separating operation) is greater than or equal to M (ST105). If the number of error determinations is greater than or equal to M, the process proceeds to step ST306. Otherwise, the process proceeds to step ST107.

### [Step ST306]

Then, the frame detection section **202** monitors the audio output time information added to each of the decoded audio frames stored in the audio output section **13A,** and detects from within the audio output section **13A** a decoded audio frame to which audio output time information that matches the audio output time information output from the demultiplexing section **11** in step ST301 is added.

### [Step ST307]

Then, the output control section **104** transitions from the "normal mode" to the "error mode" when the decoded audio frame detected by the frame detection section **202** is output from the audio output section **13A.** Therefore, the output control section **104** controls the audio output section **13A** so that the amplitude of the audio output is unconditionally limited, irrespective of the determination result from the decoding error determination section **101** (the determination result for the audio frame). Then, the process proceeds to step ST301.

### [Step ST107]

If the dynamic determination section **103** determines in step ST105 that the number of error determinations is smaller than M, the output control section **104** stays in the "normal mode". Therefore, the output control section **104** controls the audio output section **13A** so as to output the decoded audio frame based on the determination result from the decoding error determination section **101** (the determination result for the audio frame). Then, the process proceeds to step ST301.

Thus, the output of the audio output section **13A** is unconditionally limited based on the frequency of demultiplexing errors.

### [Steps ST108 and ST109]

If it is determined in step ST104 that the operation mode of the output control section **104** is the "error mode", the dynamic determination section **103** determines whether the error mode duration is greater than or equal to a period of time corresponding to J audio frames (J is a natural number) (ST108), and determines whether the number of error determinations (the number of error determinations occurring in the packet separating operation) is less than or equal to L (ST109). If the number of error determinations is less than or equal to L, the process proceeds to step ST310. Otherwise, the process proceeds to step ST111.

### [Step ST310]

Then, as in step ST306, the frame detection section **202** monitors the audio output time information added to each of the decoded audio frames stored in the audio output section **13A,** and detects a decoded audio frame to which audio output time information that matches the time information output from the demultiplexing error determination section **301** in step ST302 is added.

### [Step ST311]

Then, the output control section **104** terminates the "error mode" and transitions to the "normal mode" when the decoded audio frame detected by the frame detection section **202** is output from the audio output section **13A.** Therefore, the output control section **104** controls the audio output section **13A** so as to output the decoded audio frame based on the determination result from the decoding error determination section **101** (the determination result for the audio frame). Then, the process proceeds to step ST301.

### [Step ST111]

If the dynamic determination section **103** determines in step ST108 that the error mode duration is shorter than a period of time corresponding to J audio frames or if the dynamic determination section **103** determines in step ST109 that the number of error determinations (the number of error determinations occurring in the packet separating operation) is greater than L, the output control section **104** stays in the "error mode". Thus, the output control section **104** unconditionally limits the output of audio signals from the audio output section **13A,** irrespective of the determination result from the decoding error determination section **101** (the determination result for the audio frame). Then, the process proceeds to step ST301.

Thus, the "error mode" of the output control section **104** is terminated based on the frequency of demultiplexing errors.

### <Error mode setting process>

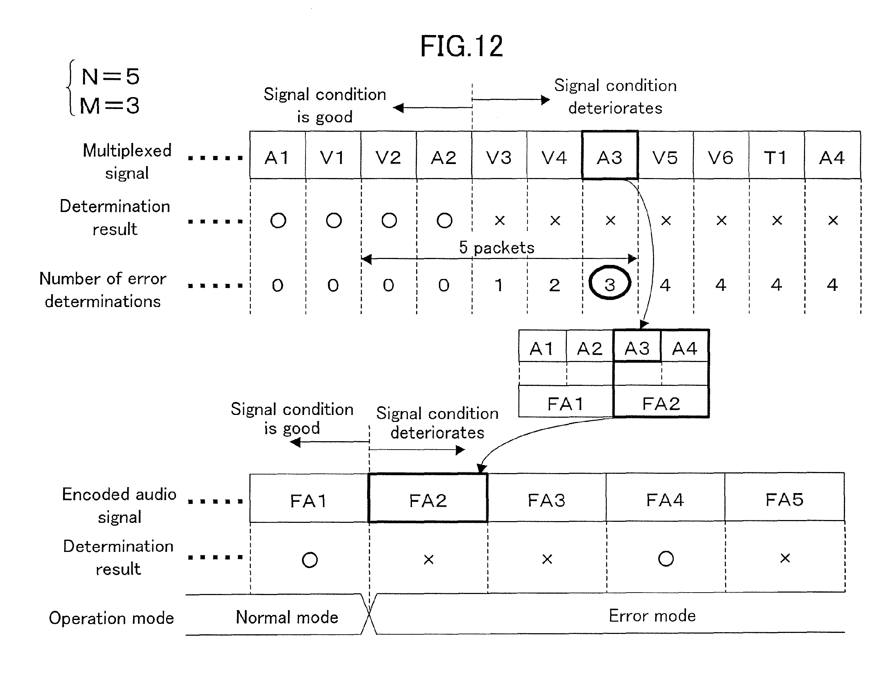

Referring now to FIG. **12****,** the error mode setting process of the decoder device shown in FIG. **10** will be described in detail. Note that the audio frame FA1 in the multiplexed signal is divided into audio packets A1 and A2, and the audio frame FA2 thereof is divided into audio packets A3 and A4.

In the period of the audio packets A1 to A2, the signal condition of the multiplexed signal is good, and the determination result for each of the audio packets A1 and A2 and the video packets V1 and V2 is "no demultiplexing error".

In and after the video packet V3, the signal condition of the multiplexed signal deteriorates, and the internal data is corrupted over a continuous portion of the multiplexed signal. Therefore, the determination result for each of the audio packets A3 and A4, the video packets V5 and V6 and the subtitle packet T1 is "demultiplexing error".

When the determination result for the audio packet A3 is obtained, the number of error determinations reaches "3", and the frame detection section **202** detects the audio frame FA2 corresponding to the audio packet A3. The output control section **104** transitions from the "normal mode" to the "error mode" when the audio frame FA2 is output from the audio output section **13A.**

The signal condition of the encoded audio signal deteriorates in and after the audio frame FA2 corresponding to the audio packets A3 and A4, and the determination result for each of the audio frames FA2, FA3 and FA5 is "decoding error". In and after the audio frame FA2, the output control section **104** unconditionally limits the output of the audio output section **13A.** Therefore, even if the determination result for the audio frame FA4 is accidentally "no decoding error", the output of the decoded audio frame for the audio frame FA4 is unconditionally limited.

### <Error mode terminating process>

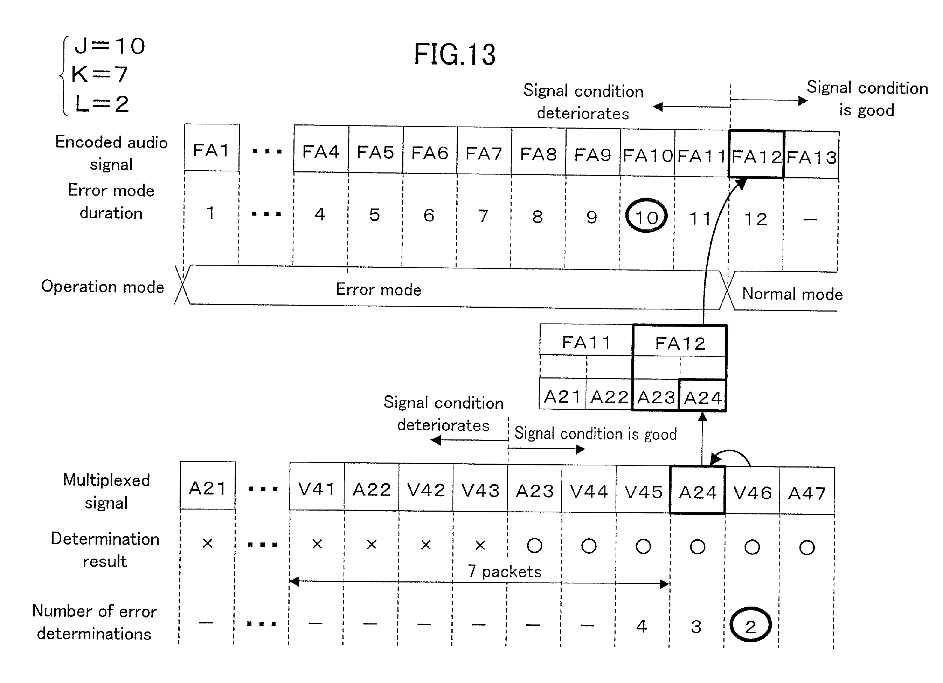

Referring now to FIG. **13****,** the error mode terminating process of the decoder device shown in FIG. **10** will be described in detail. Note that the audio frame FA11 in the multiplexed signal is divided into audio packets A21 and A22, and the audio frame FA12 thereof is divided into audio packets A23 and A24.

In the period from the audio packet A21 to the video packet V43, the signal condition of the multiplexed signal deteriorates, and the internal data is corrupted over a continuous portion of the multiplexed signal. Therefore, the determination result for each of the audio packet A21 to the video packet V43 is "decoding error".

In and after the audio packet A23, the signal condition of the multiplexed signal recovers, and the determination result for each of the audio packet A23 to the audio packet A47 is "no decoding error".

In the period of the audio frames FA1 to FA9, the error mode duration is less than "10 frames", and therefore the dynamic determination section **103** does not count the number of error determinations occurring in the packet separating operation.

The error mode duration becomes greater than or equal to "10 frames" when the audio frame FA10 is decoded by the audio decoding section **12A.** At this point in time, the video packet V45 is being separated in the demultiplexing section **11.** Therefore, when the determination result for the video packet V45 is obtained, the dynamic determination section **103** counts the number of error determinations occurring in the packet separating operation. However, since the number of error determinations is greater than "2", the output control section **104** stays in the "error mode". Similarly, when the determination result for the audio packet A24 is obtained, the output control section **104** stays in the "error mode".

When the determination result for the video packet V46 is obtained, the number of error determinations becomes "2", whereby the frame detection section **202** detects the audio frame FA12 corresponding to the audio packet A24, which is closest to the video packet V46. When the audio frame FA12 is output from the audio output section **13A,** the output control section **104** transitions from the "error mode" to the "normal mode". Therefore, in and after the audio frame FA12, the output control section **104** controls the audio output section **13A** so as to output decoded audio data based on the determination result for the audio frame.

As described above, the output of the audio output section is unconditionally limited based on the frequency of demultiplexing errors, whereby it is possible to suppress corrupted encoded data from being erroneously output by accident. Thus, it is possible to suppress the accidental occurrence of unpleasant audio noise when the internal data is corrupted over a continuous portion of the multiplexed signal.

Since the output control section returns from the "error mode" to the "normal mode" based on the frequency of demultiplexing errors, it is possible to terminate the unnecessary output limitation after the signal condition recovers.

The object to be controlled by the control section **30** is not limited to the audio decoding section **12A** and the audio output section **13A,** but may be the video decoding section **12V** and the video output section **13V,** or may also be the subtitle decoding section **12T** and the subtitle output section **13T.**

In the embodiments above, the comparison of the number of error determinations by the dynamic determination section **103** may be performed every time the determination result is updated, or may be performed every time after the determination result is updated a few times. Each of the functional blocks may be implemented as hardware or software.

It is assumed that the decoder devices described in the embodiments above can be used in fixed receiver devices such as digital television sets for receiving broadcast radio waves, mobile receiver devices such as car navigation systems and mobile telephones, and reproduction devices for reproducing storage media such as DVDs and HDDs storing multiplexed signals.

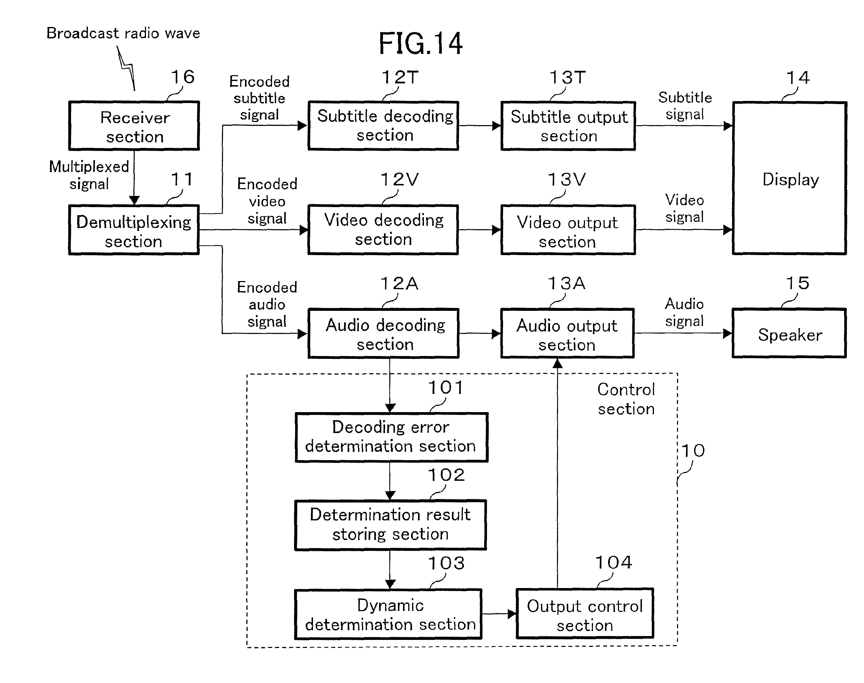

For example, as shown in FIG. **14****,** a fixed receiver device or a mobile receiver device further includes a receiver section (antenna) **16** for receiving a multiplexed signal carried on a broadcast radio wave, in addition to the configuration shown in FIG. **1****,** wherein the demultiplexing section **11** of the decoder device receives the multiplexed signal from the receiver section **16.** The receiver section **16** is also applicable to configurations shown in FIG. **6** and FIG. **10****.**

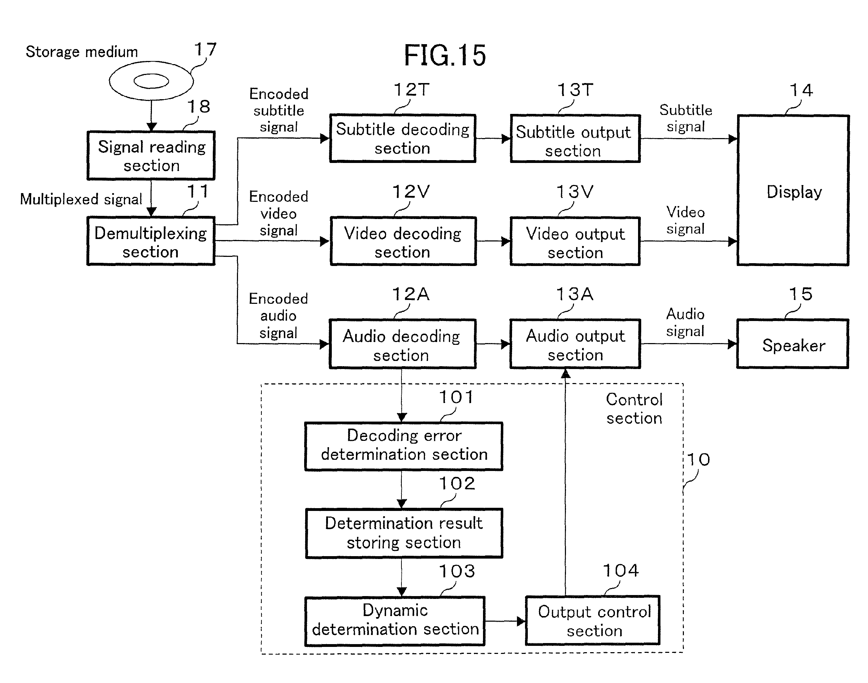

As shown in FIG. **15****,** a medium reproduction device includes a signal reading section **18** for reading out a multiplexed signal stored in a storage medium **17,** wherein the demultiplexing section **11** of the decoder device receives the multiplexed signal from the signal reading section **18.** The signal reading section **18** is also applicable to configurations shown in FIG. **6** and FIG. **10****.**

A mobile receiver device undergoes frequent changes in the reception conditions, and it is likely that the C/N ratio becomes low. Thus, the internal data is likely to be corrupted over a continuous portion of the multiplexed signal. Therefore, the decoder devices described in the embodiments above are very useful for mobile receiver devices.

As described above, the present invention is useful as, for example, a decoder device provided in a receiver device for receiving broadcast radio waves such as a digital television set, a car navigation system and a mobile telephone, and as a decoder device provided in a reproduction device for reproducing data stored on a DVD, an HDD, or the like.

## Claims

1. A decoder device for sequentially decoding a plurality of encoded data arranged in a chronological order, the decoder device comprising:
a decoding/outputting section for decoding the encoded data;
a decoding error determination section for determining presence/absence of a decoding error each time the encoded data is decoded by the decoding/outputting section;
a determination result storing section for storing determination results from the decoding error determination section in a chronological order;
a dynamic determination section for determining whether the number of determination results indicating "decoding error", among N (N is a natural number) consecutive ones of the determination results stored in the determination result storing section, is greater than or equal to M (M≤N), the N consecutive determination results including latest determination result; and
an output control section having a normal mode in which the output control section limits an output of the decoding/outputting section based on a determination result from the decoding error determination section and an error mode in which the output control section unconditionally limits an output of the decoding/outputting section irrespective of the determination result, wherein the output control section transitions to the error mode when the dynamic determination section determines that the number of determination results indicating "decoding error" is greater than or equal to M.

2. The decoder device of claim 1, wherein:
the dynamic determination section further determines whether a duration of the error mode is greater than or equal to a period of time corresponding to J pieces of the encoded data (J is a natural number) and the number of determination results indicating "decoding error", among K (K is a natural number) ones of the determination results stored in the determination result storing section, is less than or equal to L (L≤K), the K consecutive determination results including latest determination result; and
the output control section further terminates the error mode and transitions to the normal mode if the dynamic determination section determines that the duration of the error mode is greater than or equal to a period of time corresponding J pieces of the encoded data and the number of determination results indicating "decoding error" is less than or equal to L.

3. The decoder device of claim 1 or 2, wherein:
the encoded data is a portion of an encoded audio signal; and
the output control section limits the output of the decoding/outputting section by controlling the decoding/outputting section so as to attenuate an amplitude of an audio output.

4. The decoder device of claim 1 or 2, wherein:
the encoded data is a portion of an encoded video signal; and
the output control section limits an output of the decoding/outputting section by controlling the decoding/outputting section so that decoded data that has been decoded previously and whose determination result is "no decoding error" is output, instead of latest decoded data to be output by the decoding/outputting section.

5. The decoder device of claim 1 or 2, wherein:
the encoded data is a portion of an encoded subtitle signal; and
the output control section limits an output of the decoding/outputting section by controlling the decoding/outputting section so that an output of the decoded data is stopped.

6. A device for sequentially processing a multiplexed signal obtained by multiplexing together a plurality of first encoded data arranged in a chronological order and a plurality of second encoded data corresponding to the plurality of first encoded data, the device comprising:
a demultiplexing section for demultiplexing the multiplexed signal into first encoded data and second encoded data;
a first decoding/outputting section for decoding the first encoded data separated by the demultiplexing section to output first decoded data;
a first decoding error determination section for determining presence/absence of a decoding error each time the first encoded data is decoded by the first decoding/outputting section;
a second decoding/outputting section for decoding the second encoded data separated by the demultiplexing section to output second decoded data;
a second decoding error determination section for determining presence/absence of a decoding error each time the second encoded data is decoded by the second decoding/outputting section;
a determination result storing section for storing determination results from the second decoding error determination section in a chronological order;
a dynamic determination section for determining whether the number of determination results indicating "decoding error", among N (N is a natural number) consecutive ones of the determination results stored in the determination result storing section, is greater than or equal to M (M≤N), the N consecutive determination results including latest determination result;
a data detection section for detecting from within the first decoding/outputting section the first decoded data corresponding to the second decoded data for which the latest determination result has been produced, if the dynamic determination section determines that the number of determination results indicating "decoding error" is greater than or equal to M; and
an output control section having a normal mode in which the output control section limits an output of the first decoding/outputting section based on a determination result from the first decoding error determination section and an error mode in which the output control section unconditionally limits an output of the first decoding/outputting section irrespective of the determination result from the first decoding error determination section, wherein the output control section transitions to the error mode when the first decoded data detected by the data detection section is output from the first decoding/outputting section.

7. The decoder device of claim 6, wherein:
the dynamic determination section further determines whether a duration of the error mode is greater than or equal to a period of time corresponding to J pieces of the first decoded data (J is a natural number) and the determination results indicating "decoding error", among K (K is a natural number) ones of the determination results stored in the determination result storing section, is less than or equal to L (L≤K), the K consecutive determination results including latest determination result;
the frame detection section further detects from within the first decoding/outputting section the first decoded data corresponding to the second decoded data for which the latest determination result has been produced, if the dynamic determination section determines that the duration of the error mode is greater than or equal to a period of time corresponding to J pieces of the first decoded data and the number of determination results indicating "decoding error" is less than or equal to L; and
the output control section further terminates the error mode and transitions to the normal mode if the first decoded data detected by the data detection section is output from the first decoding/outputting section.

8. The decoder device of claim 6 or 7, wherein:
the first encoded data is a portion of an encoded audio signal;
the second encoded data is a portion of an encoded video signal; and
the output control section limits the output of the first decoding/outputting section by controlling the first decoding/outputting section so as to attenuate an amplitude of an audio output.

9. The decoder device of claim 6 or 7, wherein:
the first encoded data is a portion of an encoded video signal;
the second encoded data is a portion of an encoded audio signal; and
the output control section limits an output of the first decoding/outputting section by controlling the first decoding/outputting section so that first decoded data that has been decoded previously and whose determination result is "no decoding error" is output, instead of latest first decoded data to be output by the first decoding/outputting section.

10. The decoder device of claim 6 or 7, wherein:
the first encoded data is a portion of an encoded subtitle signal;
the second encoded data is a portion of an encoded audio signal or a portion of an encoded video signal; and
the output control section limits an output of the first decoding/outputting section by controlling the first decoding/outputting section so that an output of the first decoded data is stopped.

11. A device for sequentially processing a multiplexed signal obtained by multiplexing together packets of a plurality of encoded data arranged in a chronological order, the device comprising:
a demultiplexing section for demultiplexing the multiplexed signal into packets of the encoded data;
a demultiplexing error determination section for determining presence/absence of a demultiplexing error each time the encoded data is separated from the multiplexed signal by the demultiplexing section;
a decoding/outputting section for decoding the encoded data separated by the demultiplexing section;
a decoding error determination section for determining presence/absence of a decoding error each time the encoded data is decoded by the decoding/outputting section;
a determination result storing section for storing determination results from the demultiplexing error determination section in a chronological order;
a dynamic determination section for determining whether the number of determination results indicating "demultiplexing error", among N (N is a natural number) consecutive ones of the determination results stored in the determination result storing section, is greater than or equal to M (M≤N), the N consecutive determination results including latest determination result;
a data detection section for detecting from within the decoding/outputting section the decoded data corresponding to the packet for which the latest determination result has been produced, if the dynamic determination section determines that the number of determination results indicating "demultiplexing error" is greater than or equal to M; and
an output control section having a normal mode in which the output control section limits an output of the decoding/outputting section based on a determination result from the decoding error determination section and an error mode in which the output control section unconditionally limits an output of the decoding/outputting section irrespective of the determination result from the decoding error determination section, wherein the output control section transitions to the error mode when the decoded data detected by the data detection section is output from the decoding/outputting section.

12. The decoder device of claim 11, wherein:
the dynamic determination section further determines whether a duration of the error mode is greater than or equal to a period of time corresponding to J pieces of the decoded data (J is a natural number) and the determination results indicating "demultiplexing error", among K (K is a natural number) ones of the determination results stored in the determination result storing section, is less than or equal to L (L≤K), the K consecutive determination results including latest determination result;
the frame detection section further detects from within the decoding/outputting section the decoded data corresponding to the packet for which the latest determination result has been produced, if the dynamic determination section determines that the duration of the error mode is greater than or equal to a period of time corresponding to J pieces of the decoded data and that the number of determination results indicating "demultiplexing error" is less than or equal to L; and
the output control section further terminates the error mode and transitions to the normal mode if the decoded data detected by the data detection section is output from the decoding/outputting section.

13. The decoder device of claim 11 or 12, wherein:
the encoded data is a portion of an encoded audio signal; and
the output control section limits the output of the decoding/outputting section by controlling the decoding/outputting section so as to attenuate an amplitude of an audio output.

14. The decoder device of claim 11 or 12, wherein:
the encoded data is a portion of an encoded video signal; and
the output control section limits an output of the decoding/outputting section by controlling the decoding/outputting section so that decoded data that has been decoded previously and whose determination result is "no decoding error" is output, instead of latest decoded data to be output by the decoding/outputting section.

15. The decoder device of claim 11 or 12, wherein:
the encoded data is a portion of an encoded subtitle signal; and
the output control section limits an output of the decoding/outputting section by controlling the decoding/outputting section so that an output of decoded data is stopped.

16. A receiver device for receiving and processing a multiplexed signal obtained by multiplexing together a plurality of encoded data arranged in a chronological order, the receiver device comprising:
a receiver section for receiving the multiplexed signal;
a demultiplexing section for demultiplexing the multiplexed signal received by the receiver section into the encoded data;
a decoding/outputting section for decoding the encoded data separated by the demultiplexing section;
a decoding error determination section for determining presence/absence of a decoding error each time the encoded data is decoded by the decoding/outputting section;
a determination result storing section for storing determination results from the decoding error determination section in a chronological order;
a dynamic determination section for determining whether the number of determination results indicating "decoding error", among N (N is a natural number) consecutive ones of the determination results stored in the determination result storing section, is greater than or equal to M (M≤N), the N consecutive determination results including latest determination result; and
an output control section having a normal mode in which the output control section limits an output of the decoding/outputting section based on a determination result from the decoding error determination section and an error mode in which the output control section unconditionally limits an output of the decoding/outputting section irrespective of the determination result, wherein the output control section transitions to the error mode when the dynamic determination section determines that the number of determination results indicating "decoding error" is greater than or equal to M.

17. A receiver device for receiving and processing a multiplexed signal obtained by multiplexing together a plurality of first encoded data arranged in a chronological order and a plurality of second encoded data corresponding to the plurality of first encoded data, the receiver device comprising:
a receiver section for receiving the multiplexed signal;
a demultiplexing section for demultiplexing the multiplexed signal received by the receiver section into the first encoded data and the second encoded data;
a first decoding/outputting section for decoding the first encoded data separated by the demultiplexing section to output first decoded data;
a first decoding error determination section for determining presence/absence of a decoding error each time the first encoded data is decoded by the first decoding/outputting section;
a second decoding/outputting section for decoding the second encoded data separated by the demultiplexing section to output second decoded data;
a second decoding error determination section for determining presence/absence of a decoding error each time the second encoded data is decoded by the second decoding/outputting section;
a determination result storing section for storing determination results from the second decoding error determination section in a chronological order;
a dynamic determination section for determining whether the number of determination results indicating "decoding error", among N (N is a natural number) consecutive ones of the determination results stored in the determination result storing section, is greater than or equal to M (M≤N), the N consecutive determination results including latest determination result;
a data detection section for detecting from within the first decoding/outputting section the first decoded data corresponding to the second decoded data for which the latest determination result has been produced, if the dynamic determination section determines that the number of determination results indicating "decoding error" is greater than or equal to M; and
an output control section having a normal mode in which the output control section limits an output of the first decoding/outputting section based on a determination result from the first decoding error determination section and an error mode in which the output control section unconditionally limits an output of the first decoding/outputting section irrespective of the determination result from the first decoding error determination section, wherein the output control section transitions to the error mode when the first decoded data detected by the data detection section is output from the first decoding/outputting section.

18. A receiver device for receiving and processing a multiplexed signal obtained by multiplexing together packets of a plurality of encoded data arranged in a chronological order, the receiver device comprising;
a receiver section for receiving the multiplexed signal;
a demultiplexing section for demultiplexing the multiplexed signal received by the receiver section into packets of the encoded data;
a demultiplexing error determination section for determining presence/absence of a demultiplexing error each time the encoded data is separated from the multiplexed signal by the demultiplexing section;
a decoding/outputting section for decoding the encoded data separated by the demultiplexing section;
a decoding error determination section for determining presence/absence of a decoding error each time the encoded data is decoded by the decoding/outputting section;
a determination result storing section for storing determination results from the demultiplexing error determination section in a chronological order;
a dynamic determination section for determining whether the number of determination results indicating "demultiplexing error", among N (N is a natural number) consecutive ones of the determination results stored in the determination result storing section, is greater than or equal to M (M≤N), the N consecutive determination results including latest determination result;
a data detection section for detecting from within the decoding/outputting section the decoded data corresponding to the packet for which the latest determination result has been produced, if the dynamic determination section determines that the number of determination results indicating "demultiplexing error" is greater than or equal to M; and
an output control section having a normal mode in which the output control section limits an output of the decoding/outputting section based on a determination result from the decoding error determination section and an error mode in which the output control section unconditionally limits an output of the decoding/outputting section irrespective of the determination result from the decoding error determination section, wherein the output control section transitions to the error mode when the decoded data detected by the data detection section is output from the decoding/outputting section.

19. A medium reproduction device for reading out and processing a multiplexed signal from a storage medium storing the multiplexed signal, wherein the multiplexed signal is obtained by multiplexing together a plurality of encoded data arranged in a chronological order;
a signal reading section for reading out the multiplexed signal from the storage medium;
a demultiplexing section for demultiplexing the multiplexed signal read out by the signal reading section into the encoded data;
a decoding/outputting section for decoding the encoded data separated by the demultiplexing section;
a decoding error determination section for determining presence/absence of a decoding error each time the encoded data is decoded by the decoding/outputting section;
a determination result storing section for storing determination results from the decoding error determination section in a chronological order;
a dynamic determination section for determining whether the number of determination results indicating "decoding error", among N (N is a natural number) consecutive ones of the determination results stored in the determination result storing section, is greater than or equal to M (M≤N), the N consecutive determination results including latest determination result; and
an output control section having a normal mode in which the output control section limits an output of the decoding/outputting section based on a determination result from the decoding error determination section and an error mode in which the output control section unconditionally limits an output of the decoding/outputting section irrespective of the determination result, wherein the output control section transitions to the error mode when the dynamic determination section determines that the number of determination results indicating "decoding error" is greater than or equal to M.

20. A medium reproduction device for reading out and processing a multiplexed signal from a storage medium storing the multiplexed signal, wherein the multiplexed signal is obtained by multiplexing together a plurality of first encoded data arranged in a chronological order and a plurality of second encoded data corresponding to the plurality of first encoded data;
a signal reading section for reading out the multiplexed signal from the storage medium;
a demultiplexing section for demultiplexing the multiplexed signal read out by the signal reading section into the first encoded data and the second encoded data;
a first decoding/outputting section for decoding the first encoded data separated by the demultiplexing section to output first decoded data;
a first decoding error determination section for determining presence/absence of a decoding error each time the first encoded data is decoded by the first decoding/outputting section;
a second decoding/outputting section for decoding the second encoded data separated by the demultiplexing section to output second decoded data;
a second decoding error determination section for determining presence/absence of a decoding error each time the second encoded data is decoded by the second decoding/outputting section;
a determination result storing section for storing determination results from the second decoding error determination section in a chronological order;
a dynamic determination section for determining whether the number of determination results indicating "decoding error", among N (N is a natural number) consecutive ones of the determination results stored in the determination result storing section, is greater than or equal to M (M≤N), the N consecutive determination results including latest determination result;
a data detection section for detecting from within the first decoding/outputting section the first decoded data corresponding to the second decoded data for which the latest determination result has been produced, if the dynamic determination section determines that the number of determination results indicating "decoding error" is greater than or equal to M; and
an output control section having a normal mode in which the output control section limits an output of the first decoding/outputting section based on a determination result from the first decoding error determination section and an error mode in which the output control section unconditionally limits an output of the first decoding/outputting section irrespective of the determination result from the first decoding error determination section, wherein the output control section transitions to the error mode when the first decoded data detected by the data detection section is output from the first decoding/outputting section.

21. A medium reproduction device for reading out and processing a multiplexed signal from a storage medium storing the multiplexed signal, wherein the multiplexed signal is obtained by multiplexing together packets of a plurality of encoded data arranged in a chronological order;
a signal reading section for reading out the multiplexed signal from the storage medium;
a demultiplexing section for demultiplexing the multiplexed signal read out by the signal reading section into packets of the encoded data;
a demultiplexing error determination section for determining presence/absence of a demultiplexing error each time the encoded data is separated from the multiplexed signal by the demultiplexing section;
a decoding/outputting section for decoding the encoded data separated by the demultiplexing section;
a decoding error determination section for determining presence/absence of a decoding error each time the encoded data is decoded by the decoding/outputting section;
a determination result storing section for storing determination results from the demultiplexing error determination section in a chronological order;
a dynamic determination section for determining whether the number of determination results indicating "demultiplexing error", among N (N is a natural number) consecutive ones of the determination results stored in the determination result storing section, is greater than or equal to M (M≤N), the N consecutive determination results including latest determination result;
a data detection section for detecting from within the decoding/outputting section the decoded data corresponding to the packet for which the latest determination result has been produced, if the dynamic determination section determines that the number of determination results indicating "demultiplexing error" is greater than or equal to M; and
an output control section having a normal mode in which the output control section limits an output of the decoding/outputting section based on a determination result from the decoding error determination section and an error mode in which the output control section unconditionally limits an output of the decoding/outputting section irrespective of the determination result from the decoding error determination section, wherein the output control section transitions to the error mode when the decoded data detected by the data detection section is output from the decoding/outputting section.
